# EUROPÄISCHE PATENTSCHRIFT

(11) **EP 0 813 724 B1**
(45) Veröffentlichungstag und Bekanntmachung des Hinweises auf die Patenterteilung: **29.07.1998**
(21) Anmeldenummer: 96902868.7
(22) Anmeldetag: 19.02.1996
(51) Int. Cl.: G07G 1/12, G07G 1/00, G06F 3/023

(54) **MODULARE BEDIENEINHEIT FÜR DATENVERARBEITENDE GERÄTE**
MODULAR CONTROL UNIT FOR DATA-PROCESSING EQUIPMENT
MODULE DE COMMANDE POUR EQUIPEMENT DE TRAITEMENT DE DONNEES

(30) Priorität: 06.03.1995 DE 19507796
(43) Veröffentlichungstag der Anmeldung: 29.12.1997
(73) Patentinhaber: Siemens Nixdorf Informationssysteme AG, 33106 Paderborn (DE)
(72) Erfinder: BAITZ, Günter, D-13503 Berlin (DE); KAMIN, Hartmut, D-10585 Berlin (DE)
(74) Vertreter: Epping, Wilhelm, Dr.-Ing.
(86) Internationale Anmeldenummer: DE9600252
(87) Internationale Veröffentlichungsnummer: WO9627861

(56) Entgegenhaltungen:
- EP-A- 0 013 318
- EP-A- 0 090 146
- EP-A- 0 161 798
- DE-A- 3 011 934
- DE-A- 3 125 012
- DE-U- 9 104 418
- DE-U-29 503 786
- FR-A- 2 565 713
- GB-A- 2 230 740
- US-A- 4 567 336

## Beschreibung

Die Erfindung betrifft eine Bedieneinheit, welche zum Betrieb an einem mit einer Datenverarbeitungseinheit ausgestatteten Gerät, insbesondere einer Registrierkasse, geeignet ist.

Bedieneinheiten der genannten Art umfassen ein Sichtgerät und eine Eingabeeinrichtung für die manuelle Eingabe von Daten, insbesondere Handelsdaten und Steuerbefehlen. Bisweilen ist zusätzlich ein Magnetkartenleser vorgesehen.

Aus der WO 90/15559 A1 ist bereits eine Anordnung bekannt, bei der unter einem Datensichtgerät ein Bedienteil angeordnet ist. In dem Bedienteil sind eine Gegensprechanlage, eine Steuertastatur, eine Dateneingabetastatur und ein Kartenleser untergebracht. Die Druckschrift zeigt auch ein Ausführungsbeispiel, in dem das Datensichtgerät und die genannten Bedienelemente in ein einziges Gehäuse eingebaut sind.

Beide Anordnungen haben den Nachteil, daß deren Gehäuse für die maximal mögliche Ausstattung vorbereitet sein muß. Dies ist technisch aufwendig und damit teuer.

Aus der DE-U-91 04 418 ist eine Tastatur bekannt, die aus mehreren unterschiedlich breiten jeweils von einem vollständigen Teilgehäuse umschlossenen Tastenfeldabschnitten besteht. Die Teilgehäuse haben einander entsprechende Seitenprofile und sind derart miteinander verbindbar, daß die Seitenwände benachbarter Tastenfeldabschnitte dicht aneinander liegen. Die einzelnen Teilgehäuse sind über zwei runde Stangen verschieblich miteinander gekoppelt, deren eine miteinander fluchtende Öffnungen in den einander zugewandten Seitenwänden benachbarter Teilgehäuse konzentrisch durchsetzt. Die lichte Weite der Öffnungen ist so gewählt, daß die Stange zusammen mit einem auf diese aufgewickelten Kabel frei gleiten kann.

In der EP-A-0 161 798 ist eine ähnliche Anordnung beschrieben, bei der die einander zugewandten Seitenwände benachbarter Teilgehäuse mit ineinander greifenden, zueinander versetzten Vorsprüngen versehen sind. Die mechanische Verbindung der Teilgehäuse erfolgt mit Hilfe eines Riegels, der durch die Vorsprünge hindurch geführt wird. Zur elektrischen Verbindung der Teilgehäuse sind an deren Seitenwänden zueinander komplementäre Stecker angebracht.

Es ist die Aufgabe der Erfindung, ein modulares Aufbaukonzept für eine Geräte-Bedieneinheit anzugeben, die das einfache Zusammenfügen nur solcher Peripheriegeräte gestattet, die für den jeweiligen Einsatzfall des Gerätes erforderlich sind, die Bedieneinheit aber als ein in sich geschlossenes Gerät erscheinen läßt, das auch entfernt von der Datenverarbeitungseinheit aufstellbar ist. Gleichwohl soll es möglich sein, ein einzelnes Peripheriegerät zu öffnen, ohne an einem anderen Peripheriegerät Manipulationen vornehmen zu müssen.

Die Aufgabe wird durch die Merkmale des Anspruchs 1 gelöst.

Die Erfindung geht von der Überlegung aus, daß eine Bedieneinheit eines datenverarbeitenden Gerätes, z.B. eines Handelsterminals zumeist ein Sichtgerät, vor allem aber verschiedene Eingabegeräte benötigt, mit denen die zu einem Warenerfassungs- oder -Abrechnungsvorgang benötigten Daten eingegeben werden können. Diese Peripheriegeräte haben wenigstens zum Teil eigene Kabelanschlüsse zu einer Datenverarbeitungseinheit. Soll eine dem Anwendungsfall entsprechende Kombination von Peripheriegeräten als eine Einheit erscheinen, so müssen alle Peripheriegeräte zu einem gleichsam monolitischen Block zusammengefaßt werden mit einer allen gemeinsamen Kabelführung.

Der mechanisch einfachste Aufbau einer Bedieneinheit ist gegeben, wenn ein Bildschirm mit einer berührungsempfindlichen Fläche zu einem sogenannten Touch Screen oder einem Pen Computer Display zusammengefügt wird. Beide Elemente sind in einem gemeinsamen Gehäuse unterzubringen. Eine solche Anordnung ist sehr flexibel, da die gesamte Bildschirmfläche für Eingabefunktionen nutzbar ist, aber nicht billig.

Häufig genügt es, nur einen Randbereich eines Bildschirms zu nutzen. Dazu wird am Bildschirmrand eine Reihe frei programmierbarer Tasten, sogenannte Soft Keys, angeordnet, deren jeweilige Funktion auf dem Bildschirm angezeigt wird. Will man die Nachteile der bekannten Anordnung vermeiden, so verbietet sich der Einbau der Tasten in das Bildschirmgehäuse. In Anwendung der Erfindung ist es vorgesehen, die Soft Keys in einem separaten Gehäuse unterzubringen, das seitlich von dem Bildschirmgehäuse anzuordnen ist. Vielfach ist zusätzlich eine Eingabetastatur gewünscht, sei es, weil man Daten- und Steuertasten getrennt haben möchte, sei es, weil eine mechanische Tastatur mit fühlbarem Tastenhub und Druckpunkt gewünscht wird. Eine solche Tastatur ist in einem separaten Gehäuse anzuordnen. Ein eventuell noch erforderlicher Magnetkartenleser - vorzugsweise kommt wegen seiner kleinen Bauform ein Durchzugleser zum Einsatz - erhält ein weiteres Gehäuse.

Die genannten Eingabegeräte - Soft Keys, Zusatztastatur und Magnetkartenleser - sind in vorteilhafter Weise über eine einzige Steuereinheit, einen Tastaturcontroller, an die Datenverarbeitungseinheit des Gerätes anschließbar. Diese Steuereinheit ist wahlfrei in einem der Eingabegeräte-Gehäuse anordbar, so daß die Modularität der Anordnung und die Beschränkung nur auf tatsächlich benötigte Eingabegeräte voll gewahrt bleibt. Baut man die dem Benutzer zugänglichen Elemente der Peripheriegeräte in das jeweilige Gehäuseoberteil ein, so wird die wahlfreie Anordnung der Steuereinheit noch dadurch begünstigt, daß oberhalb der Bodenplatte ein Kanal über die gesamte Gerätehöhe frei bleibt, in der die Steuereinheit untergebracht werden kann. In dem Kanal kann dann einerseits ein zu der Datenverarbeitungseinheit führendes Kabel verlegt und andererseits die von den Eingabeelementen zu der Steuereinheit führende Verdrahtung verlegt werden.

In der einem benachbarten Gerät zugewandten Seitenwand jedes Gehäuseoberteils ist eine mit dem Kanal fluchtende Öffnung ausgespart, die das teilweise Hineinragen der in einem der Periphereigerätegehäuse angeordneten Steuereinheit in das Nachbargehäuse gestattet. Dies hat den Vorteil, daß ein Anschlußkabel leicht auf den aus dem einen Peripheriegerät herausragenden Teil der Steuereinheit aufzustecken ist und daran anschließend erst das eine Peripheriegerät an das Nachbargerät herangerückt zu werden braucht. Dieses nimmt dann den Stecker des Anschlußkabels auf, so daß letzteres verdeckt weitergeführt werden kann. In Peripheriegeräten ohne Steuereinheit bildet sich an deren Platz ein durchgängiger Kabelkanal.
In einer vorteilhaften Weiterbildung der Erfindung weist die Bodenplatte jedes Peripheriegerätes auf der zum Nachbargehäuse weisenden Seite einen von dem Gehäuseoberteil wegweisenden Versprung auf, der der Materialdicke der Bodenplatten entspricht. Bei entsprechender seitlicher Tiefe des Versprunges wird es möglich, für Peripheriegeräte unterschiedlicher Breite einen einzigen Bodenplattentyp zu verwenden. Der seitliche Überstand der Bodenplatte über ein schmales Peripheriegerät kann dann vollständig von dem Versprung aufgenommen werden. Ferner sind Breitentoleranzen der Gehäuse und der Bodenplatten damit leicht auszugleichen.

Weitere Merkmale und vorteilhafte Weiterbildungen der Erfindung sind den Ansprüchen und der Beschreibung und Zeichnung eines Ausführungsbeispiels zu entnehmen. Es zeigt:
- Fig. 1: ein Sichtgerät mit Eingabegeräten in Vorderansicht
- Fig. 2: die Draufsicht der Gehäuseteile der Anordnung aus Fig. 1 in Explosionsdarstellung,
- Fig. 3: die Seitenansicht entlang einer Schnittlinie III-III in Fig. 1 mit einem von einer Bodenplatte gelöstem Gehäuseoberteil.

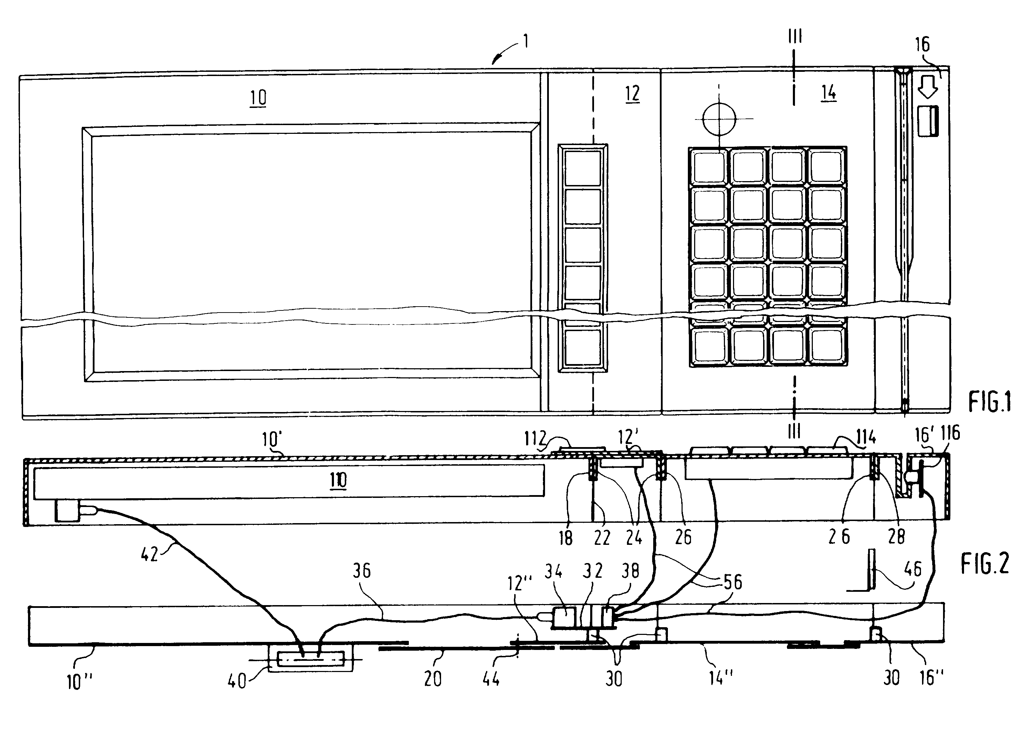

In Fig. 1 ist eine Bedieneinheit 1, bestehend aus den Peripheriegeräten Sichtgerät 10 und daran angereihten Eingabegeräten, nämlich einer Soft Key-Leiste 12, einer Eingabetastatur 14 und einem Durchzug-Magnetkartenleser 16 in Vorderansicht dargestellt.

Alle Peripheriegeräte 10 bis 16 sind lückenlos aneinandergefügt. Sie haben einander entsprechende Seitenprofile, so daß sich eine monolitische Form der Bedieneinheit 1 ergibt. Die Peripheriegeräte 10 bis 16 sind unterschiedlich breit.

Fig. 2 zeigt die Bedieneinheit 1 in geschnittener Draufsicht, bei der die Gehäuseoberteile 10' bis 16' von den Bodenplatten 10" bis 16" abgehoben sind. Die Bodenplatten bestehen aus Stahlblech. Die Bodenplatte 10" des Sichtgerätes 10 ist oben und unten und an ihrer in der Figur linken Seite aufgekantet, so daß sie dort von dem Gehäuseoberteil 10' übergriffen wird, wenn dieses auf die Bodenplatte 10" aufgesetzt ist. Auf der rechten Seite ist die Bodenplatte 10" gegenüber dem Gehäuseoberteil 10' verschmälert. Die Bodenplatte 10" wird nach rechts von einem Gürtelblech 20 überlappt. Die rechte Seitenwand 18 des Gehäuseoberteils 10' ist verkürzt, so daß sich zwischen dieser und dem Gürtelblech 20 eine Ausnehmung 22 ergibt.

Die Gehäuseoberteile 12' und 14' und die zugehörigen Bodenplatten 12" und 14" der Soft Key-Leiste 12 bzw. der Eingabetastatur 14 sind in gleicher Weise aufgebaut. Sie unterscheiden sich nur durch ihre unterschiedliche Breite von einander und von dem Gehäuseoberteil 10' bzw. der Bodenplatte 10" des Sichtgerätes. Ferner sind ihre Bodenplatten 12" bzw. 14" plan und ihre beiden Seitenwände 24 bzw. 26 verkürzt.

Das Gehäuseoberteil 16' und die Bodenplatte 16" des Durchzug-Magnetkartenlesers 16 ist spiegelbildlich zu dem Gehäuseoberteil 10' und der Bodenplatte 10" des Sichtgerätes 10 aufgebaut, d.h. die verkürzte Seitenwand 28 des Gehäuseoberteils 16' befindet sich auf der linken Seite. Die Bodenplatte 16" trägt kein Gürtelblech. Die Bodenplatten 12", 14", 16" ragen auf der linken Seite über das jeweilige Gehäuseoberteil 12', 14', 16' hinaus.

Auf jeder der Bodenplatten 12", 14", 16" sind Befestigungsbuchsen 30 angebracht, auf denen die Leiterplatte einer Steuereinheit 32 befestigbar ist. Bei dem dargestellten Ausführungsbeispiel ist die Steuereinheit 32 im Gehäuse der Soft Key-Leiste 12 angeordnet, sie kann aber auch in der Eingabetastatur 14 oder dem Durchzug-Magnetkartenleser 16 eingebaut sein. Auf der linken Seite trägt die Steuereinheit 32 einen Anschlußstecker 34 für ein zu der Datenverarbeitungseinrichtung führendes Peripheriekabel 36, auf der rechten Seite Verbindungsstecker 38 für die Eingabeelemente 112, 114, 116, welche in dem jeweiligen Gehäuseoberteil 12', 14', 16' der Eingabegeräte 12, 14, 16 eingebaut sind. Wie bei dem gewählten Ausführungsbeispiel für die Soft Key-Leiste 12 exemplarisch dargestellt, ragt die Steuereinheit 32 mit ihrer linken Seite teilweise in das Nachbar-Gehäuseoberteil 10' hinein.

An der Bodenplatte 10" des Sichtgerätes 10 ist ein Kabelauslaßstutzen 40 angebracht, durch den hindurch das Peripheriekabel 36 und ein Sichtgerätekabel 42, welches an die Bildschirmeinheit (bzw. an die kombinierte Bildschirm-Eingabeeinheit bei Sichtgeräten mit berührungsempfindlicher Eingabefläche) 110 angeschlossen ist, zu einem Datenverarbeitungsgerät 3 geführt werden. Der Kabelauslaßstutzen dient zugleich der Befestigung der Bedieneinheit an einem ebenfalls nicht dargestellten Ständer. Der Kabelauslaßstutzen 40 kann grundsätzlich an der Bodenplatte jedes Peripheriegerätes angebracht sein. Es ist auch möglich, ihn an der Bodenplatte einer separaten kastenförmigen Kabelabführungseinheit vorzusehen, die nicht dargestellt ist. Diese hat dann das gleiche Seitenprofil wie die Peripheriegeräte 10 bis 16 und eine Breite, die durch den für die Kabel benötigten Rangierraum bestimmt wird. Insbesondere bei einer größeren Anzahl aneinanderzureihender Peripheriegeräte ist es zweckmäßig, die Kabelabführungseinheit etwa in der Mitte anzuordnen, um eine einseitige Belastung des Ständers zu vermeiden.

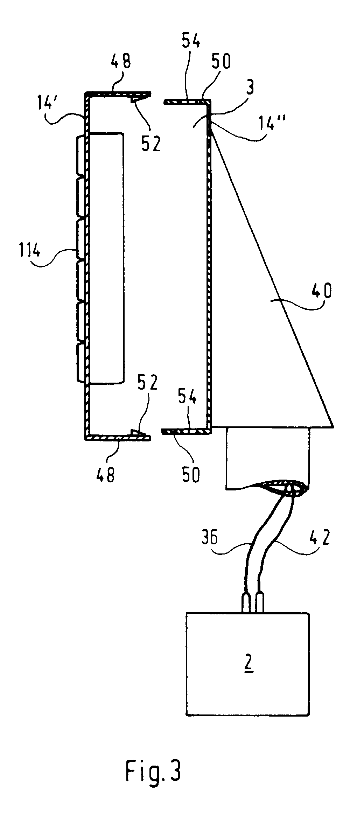

In Fig. 3 ist die Bedieneinheit 1 in einer geschnittenen Seitenansicht entlang einer Schnittlinie III-III in Fig. 1 mit von der Bodenplatte 14" gelöstem Gehäuseoberteil 14' dargestellt. Die Bodenplatte 14" und das Gehäuseoberteil 14' der Eingabetastatur 14 haben einander zugewandte U-förmige seitliche Querschnittsprofile, wobei das Gehäuseoberteil 14' eine solche lichte Höhe hat, daß es im zusammengebauten Zustand des Gehäuses 14', 14" die U-Schenkel 50 der Bodenplatte 14" übergreift. An den U-Schenkeln 48 des Gehäuseoberteils 14' sind nach innen gerichtete Rastvorsprünge 52 und an den U-Schenkeln 50 der Bodenplatte 14" mit diesen korrespondierende Rastausnehmungen 54 angeordnet. Die Gehäuse der übrigen Peripheriegeräte sind in gleicher Weise gestaltet.

In dem dargestellten Ausführungsbeispiel wird zur Montage der Peripheriegeräte 10 bis 16 aneinander das Peripheriekabel 36 auf den Peripheriekabel-Anschlußstecker 34 gesteckt. Dann wird die Bodenplatte 12" auf das Gürtelblech 20 des Sichtgerätes 10 gelegt, dicht an das Sichtgerät 10 herangeschoben und durch eine Schraubverbindung 44 fest mit dem Gürtelblech 20 verbunden. In gleicher Weise wird mit der Bodenplatte 14" der Eingabetastatur 14 und dem Bodenblech 16" des Durchzug-Magnetkartenlesers 16 verfahren. Nun werden die Gehäuseoberteile 10', 12', 14', und 16' auf die zugehörigen Bodenplatten aufgerastet, indem zunächst der obere Rastvorsprung 52 in die Rastausnehmung 54 eingehakt und dann das Gehäuseoberteil in Richtung der Bodenplatte verschwenkt wird, bis auch der untere Rastvorsprung 52 in die untere Rastausnehmung 54 einrastet. Dabei sind zunächst die Anschlußkabel 56 der genannten Eingabeelemente auf die Stecker 38 aufzustecken. Zur Demontage eines Peripheriegerätes wir die Verrastung der Gehäuseteile dieses Gerätes gelöst, wonach das Gehäuseoberteil von der Bodenplatte abgenommen werden kann. Die übrigen Peripheriegeräte müssen dazu nicht geöffnet oder die Bodenplatten auseinandergeschraubt werden.

Bei dem gewählten Ausführungsbeispiel ist die Breite der Bodenplatten 12" bis 16" der Eingabegeräte 12 bis 16 der Breite der zugehörigen Gehäuseoberteile 12' bis 16' angepaßt. Es ist mit Rücksicht auf eine Einschränkung der Typenvielfalt aber auch möglich, nur eine einzige Bodenplatten-Variante, etwa die der Eingabetastatur 14, zu verwenden. Der unterschiedliche seitliche Überstand der Bodenplatten über die Gehäuseoberteile wird dann vorteilhaft von dem besonders breiten Gürtelblech aufgefangen.

Bei dem beschriebenen Ausführungsbeispiel wurde ferner davon ausgegangen, daß das Sichtgerät 10 stets links und der Durchzug-Magnetkartenleser 16 stets rechts angeordnet ist. Um auch bezüglich der Plazierung die universelle Einsetzbarkeit der Peripheriegeräte sicherzustellen, ist es möglich, die Seitenwände aller Peripheriegeräte zu verkürzen, wie dies z.B. für die rechte Seitenwand 18 des Sichtgerätes 10 beschrieben ist. Die der Ausnehmung 22 entsprechende Ausnehmung in den äußeren Seitenwänden ist dann durch eine Abschlußblende 46 verschließbar.

## Patentansprüche

1. Bedieneinheit (1) welche zum Betrieb an einem mit einer Datenverarbeitungseinheit (2) ausgestatteten Gerät geeignet ist, mit einer Vielzahl von zum Anschluß an die Datenverarbeitungseinheit (2) geeigneten Perpheriegeräten (10, 12, 14, 16), welch jedes
in einem eigenen, durch eine Bodenplatte (10", 12", 14", 16") nach unten begrenzen Gehäuse (10', 10"; 12', 12"; 14', 14"; 16', 16") beliebiger Breite angeordnet ist, wobei
die Gehäuse (10', 10"; 12', 12"; 14', 14"; 16', 16") einander entsprechende Seitenprofile haben und derart miteinander verbindbar sind, daß die Seitenwände (18, 24; 24, 26; 26, 28) benachbarter Peripheriegeräte (10, 12, 14, 16) dicht aneinander liegen, und
in der einem benachbarten Gerät (10, 12, 14, 16) zugewandten Seitenwand jedes Gehäuseoberteils (10', 12', 14', 16') eine mit einem Kanal (3) fluchtende Öffnung (22) ausgespart ist, **dadurch gekennzeichnet**, daß die Verbindung zwischen den Gehäusen (10',10"; 12',12"; 14',14"; 16',16";) über deren Bodenplatten (10", 12", 14", 16") erfolgt,
die einem Benutzer zugänglichen Elemente (110, 112, 114, 116) der Peripheriegeräte (10, 12, 14, 16) in dem Gehäuseoberteil (10', 12', 14', 16') befestigt sind und oberhalb der Bodenplatte (10", 12", 14", 16") der Kanal (3) mit einer der Höhe des Gehäuseoberteils (10', 12', 14', 16') entsprechenden Breite frei bleibt und
eine wenigstens einer Gruppe von Peripheriegeräten (12, 14, 16) gemeinsame Steuereinheit (32), deren Breite der des schmalsten Peripheriegerätegehäuses entspricht, wahlfrei in einem der Peripheriegeräte (12, 14, 16) anordbar ist.

2. Anordnung nach Anspruch 1, bei der die Bodenplatte (10", 12", 14", 16") und das Gehäuseoberteil (10', 12', 14', 16') jedes Peripheriegerätes (10, 12, 14, 16) einander zugewandte U-förmige seitliche Querschnittsprofile aufweisen, das Gehäuseoberteil (10', 12', 14', 16') im zusammengebauten Zustand des Gehäuses (10', 10"; 12', 12"; 14', 14"; 16', 16") die U-Schenkel (50) der Bodenplatte (10", 12", 14", 16") übergreift und an den U-Schenkeln (48) des Gehäuseoberteils (10', 12', 14', 16') und den U-Schenkeln (50) der Bodenplatte (10", 12", 14", 16") miteinander korrespondierende Rastvorsprünge (52) und Rastausnehmungen (54) angeordnet sind.

3. Anordnung nach Anspruch 1 oder 2, bei der ein Peripheriegerät (10) mit einem Kabelauslaßstutzen (40) für die Führung aller von der Bedieneinheit (1) zu der Datenverarbeitungseinheit (2) führenden Kabel (36, 42) versehen ist, der zugleich der Befestigung der Bedieneinheit (1) an einem Ständer dient.

4. Anordnung nach einem der Ansprüche 1 bis 3, bei der die Steuereinheit (32) auf einem der Bodenbleche (12', 14', 16') befestigt ist.

5. Anordnung nach einem der Ansprüche 1 bis 4, bei der die Bodenplatte (10", 12", 14") auf der einem benachbarten Peripheriegerät (12, 14, 16) zugewandten Seite einen von dem Gehäuseoberteil (10', 12', 14') wegweisenden Versprung aufweist, der der Materialdicke der Bodenplatte (10", 12", 14", 16") entspricht.

6. Anordnung nach Anspruch 5, bei der die Bodenplatte (10", 12", 14", 16") als Bodenblech ausgebildet und der Versprung durch ein auf diesem befestigtes Gürtelblech (20) von der Tiefe des Bodenblechs gebildet ist, das letzteres auf der dem benachbarten Gerät zugewandten Seite überragt.

7. Anordnung nach Anspruch 5 oder 6, bei der für Peripheriegeräte unterschiedlicher Breite eine Bodenplatte (14") vorgesehen ist, deren Breite dem breitesten Peripheriegerät (14) entspricht, und der Versprung eine solche seitliche Tiefe hat, daß auch der Überstand einer unter einem schmalen Peripheriegehäuse angeordneten Bodenplatte voll von dem Versprung aufgenommen wird.

8. Anordnung nach einem der vorhergehenden Ansprüche, bei der eines der Peripheriegeräte ein Sichtgerät (10) ist.

9. Anordnung nach Anspruch 8, bei dem das Sichtgerät (10) einen LCD-Bildschirm mit oder ohne berührungsempfindliche Oberfläche enthält.

10. Anordnung nach einem der vorhergehenden Ansprüche, bei der die auf der Bodenplatte (14") eines Peripheriegerätes (14) angebrachte Steuereinheit (32) teilweise in das Nachbargerät (10) hineinragt.

## Claims

1. Operating unit (1) which is suitable for operation on a device that is equipped with a data processing unit (2) and has a multiplicity of peripheral units (10, 12, 14, 16) which are suitable for connection to the data processing unit (2), and each of which
is arranged in its own housing (10', 10"; 12', 12"; 14', 14"; 16', 16"), which is bounded at the bottom by a base plate (10", 12", 14", 16") and is of any desired width, the housings (10', 10"; 12', 12"; 14', 14"; 16', 16") having mutually corresponding side profiles and it being possible for them to be connected to one another in such a way that the side walls (18, 24; 24, 26; 26, 28) of adjacent peripheral devices (10, 12, 14, 16) lie close to one another, and
an opening (22) that aligns with a channel (3) being cut out of that side wall of each housing upper part (10', 12', 14', 16') that faces an adjacent device (10, 12, 14, 16), characterized in that
the connection between the housings (10', 10"; 12', 12"; 14', 14"; 16', 16") is made via their base plates (10", 12", 14", 16"),
those elements (110, 112, 114, 116) of the peripheral devices (10, 12, 14, 16) that are accessible to a user are fastened in the housing upper part (10', 12', 14', 16') and, above the base plate (10", 12", 14", 16"), the channel (3) remains free over a width that corresponds to the height of the housing upper part (10', 12', 14', 16') and
a control unit (32) which is common to at least one group of peripheral devices (12, 14, 16) and whose width corresponds to that of the narrowest peripheral-device housing can optionally be arranged in one of the peripheral devices (12, 14, 16).

2. Arrangement according to Claim 1, in which the base plate (10", 12", 14", 16") and the housing upper part (10', 12', 14', 16') of each peripheral device (10, 12, 14, 16) have mutually facing, U-shaped lateral cross-sectional profiles, the housing upper part (10', 12', 14', 16') engages over the limbs (50) of the U of the base plate (10", 12", 14", 16") when the housing (10', 10"; 12', 12"; 14', 14"; 16', 16") is assembled, and mutually corresponding latching projections (52) and latching recesses (54) are arranged on the limbs (48) of the U of the housing upper part (10', 12', 14', 16') and on the limbs (50) of the U of the base plate (10", 12", 14", 16") .

3. Arrangement according to Claim 1 or 2, in which a peripheral device (10) is provided with a cable outlet gland (40) for the guidance of all the cables (36, 42) leading from the operating unit (1) to the data processing unit (2), this gland simultaneously being used for fastening the operating unit (1) to a stand.

4. Arrangement according to one of Claims 1 to 3, in which the control unit (32) is fastened to one of the bottom metal sheets (12', 14', 16').

5. Arrangement according to one of Claims 1 to 4, in which the base plate (10", 12", 14") has, on that side facing an adjacent peripheral device (12, 14, 16), a projection that points away from the housing upper part (10', 12', 14') and corresponds to the material thickness of the base plate (10", 12", 14", 16").

6. Arrangement according to Claim 5, in which the base plate (10", 12", 14", 16") is designed as a bottom metal sheet and the projection is formed by a sheet metal strip (20) of the depth of the bottom metal sheet and fastened on the latter, and the latter projects on that side facing the adjacent device.

7. Arrangement according to Claim 5 or 6, in which, for peripheral devices of different widths, provision is made for a base plate (14") whose width corresponds to the widest peripheral device (14), and the projection has a lateral depth such that the excess length of a base plate arranged underneath a narrow peripheral housing is also completely accommodated by the projection.

8. Arrangement according to one of the preceding claims, in which one of the peripheral devices is a visual display unit (10).

9. Arrangement according to Claim 8, in which the visual display unit (10) has an LCD screen with or without a touch-sensitive surface.

10. Arrangement according to one of the preceding claims, in which the control unit (32) that is fitted on the base plate (14") of a peripheral device (14) projects partially into the adjacent device (10).

## Revendications

1. Module de commande (1), apte à fonctionner sur un appareil équipé d'une unité de traitement de données (2), comportant plusieurs appareils périphériques (10, 12, 14, 16) aptes à être raccordés à l'unité de traitement de données (2),
chacun de ces appareils périphériques étant disposé dans sa propre enveloppe (10', 10" ; 12', 12" ; 14', 14" ; 16', 16") délimitée en bas par une plaque de fond (10", 12", 14", 16") et de largeur pouvant être choisie à volonté,
les enveloppes (10', 10" ; 12', 12" ; 14', 14" ; 16', 16") ayant des profils latéraux qui se correspondent et pouvant être assemblées les unes aux autres de telle sorte que les parois latérales (18, 24 ; 24, 26 ; 26, 28) d'appareils périphériques voisins (10, 12, 14, 16) sont appliquées étroitement les unes contre les autres, et
une ouverture (22) alignée avec un canal (3) étant ménagée dans la paroi latérale, se trouvant du côté d'un appareil voisin (10, 12, 14, 16), de chaque partie supérieure d'enveloppe (10', 12', 14', 16'),
caractérisé par le fait que
l'assemblage entre les enveloppes (10', 10" ; 12', 12" ; 14', 14" ; 16', 16") s'effectue au moyen de leurs plaques de fond (10", 12", 14", 16"),
les éléments (110, 112, 114, 116), accessibles à un utilisateur, des appareils périphériques (10, 12, 14, 16) sont fixés dans la partie supérieure d'enveloppe (10', 12', 14', 16') et le canal (3) reste libre au-dessus de la plaque de fond (10", 12", 14", 16") sur une largeur correspondant à la hauteur de la partie supérieure d'enveloppe (10', 12', 14', 16'), et
une unité de commande (32), qui est commune au moins à un groupe d'appareils périphériques (12, 14, 16) et dont la largeur correspond à la largeur du plus étroit enveloppe d'appareil périphérique, peut être disposée à volonté dans un des appareils périphériques (12, 14, 16).

2. Dispositif selon la revendication 1, dans lequel la plaque de fond (10", 12", 14", 16") et la partie supérieure d'enveloppe (10', 12', 14', 16') de chaque appareil périphérique (10, 12, 14, 16) ont des sections transversales latérales en forme de U tournés les uns vers les autres, la partie supérieure d'enveloppe (10', 12', 14', 16') passe par-dessus les côtés du U (50) de la plaque de fond (10", 12", 14", 16") lorsque l'enveloppe (10', 10" ; 12', 12" ; 14', 14" ; 16', 16") est monté et des protubérances d'arrêt (52) et des creux d'arrêt (54) qui se correspondent sont agencés respectivement sur les côtés du U (48) de la partie supérieure d'enveloppe (10', 12', 14', 16') et sur les côtés du U (50) de la plaque de fond (10", 12", 14", 16").

3. Dispositif selon la revendication 1 ou 2, dans lequel un appareil périphérique (10) est muni d'un raccord de sortie de câble (40), qui est destiné à guider tous les câbles (36, 42) conduisant du module de commande (1) à l'unité de traitement de données (2) et qui sert en même temps à la fixation du module de commande (1) sur un support.

4. Dispositif selon l'une des revendications 1 à 3, dans lequel l'unité de commande (32) est fixée sur une des plaques de fond (12", 14", 16").

5. Dispositif selon l'une des revendications 1 à 4, dans lequel les plaques de fond (10", 12", 14") comportent, sur la face se trouvant du côté d'un appareil périphérique voisin (12, 14, 16), une partie décalée, à l'opposé de la partie supérieure d'enveloppe (10', 12', 14'), qui correspond à l'épaisseur du matériau de la plaque de fond (10", 12", 14", 16").

6. Dispositif selon la revendication 5, dans lequel la plaque de fond (10", 12", 14", 16") est une tôle de fond et la partie décalée est formée par une tôle de ceinture (20) fixée à la tôle de fond, de la même profondeur que la tôle de fond et la dépassant sur la face se trouvant du côté de l'appareil voisin.

7. Dispositif selon la revendication 5 ou 6, dans lequel, pour des appareils périphériques de différentes largeurs, il est prévu une plaque de fond (14") dont la largeur correspond au plus large appareil périphérique (14) et la partie décalée a une profondeur latérale telle que même le porte-à-faux d'une plaque de fond disposée sous une enveloppe périphérique étroite est pris complètement par la partie décalée.

8. Dispositif selon l'une des revendications précédentes, dans lequel un des appareils périphériques est une console de visualisation (10).

9. Dispositif selon la revendication 8, dans lequel la console de visualisation (10) comporte un écran LCD avec ou sans surface tactile.

10. Dispositif selon l'une des revendications précédentes, dans lequel l'unité de commande (32) placée sur la plaque de fond (14") d'un appareil périphérique (14) rentre en partie dans l'appareil voisin (10).
